Europäisches Patentamt

**European Patent Office**

**Office européen des brevets**

(19)

(11) Veröffentlichungsnummer: **0 008 330**
**B1**

(12) EUROPÄISCHE PATENTSCHRIFT

(45) Veröffentlichungstag der Patentschrift: **20.05.81**

(51) Int. Cl.³: **C 01 B 7/07**, C 01 B 7/09

(21) Anmeldenummer: **79102063.9**

(22) Anmeldetag: **22.06.79**

(54) Verfahren zur Trennung von Chlorwasserstoff und Bromwasserstoff.

(30) Priorität. **21.08.78 DE 2836580**

(43) Veroffentlichungstag der Anmeldung:
**05.03.80 Patentblatt 80/5**

(45) Bekanntmachung des Hinweises auf die Patenterteilung:
**20.05.81 Patentblatt 81/20**

(84) Benannte Vertragsstaaten:
**BE FR GB IT NL**

(56) Entgegenhaltungen:
**EP-A2-0 003 472**
**DE-A-1 667 537**
**DE-B2-2 633 640**
**DE-C-873 994**
**DE-C-886 893**
**US-A-2 520 947**
**US-A-3 445 188**

(73) Patentinhaber: **CHEMISCHE WERKE HÜLS AG,**
**Postfach 1320, D-4370 Marl 1 (DE)**

(72) Erfinder: **Coenen, Alfred, Dr., Guido-Heiland-Strasse 3,**
**D-4370 Marl (DE)**
Erfinder: **Kosswig, Kurt, Dr., Hoechster Strasse 10,**
**D-4370 Marl (DE)**
Erfinder: **Wienhöfer, Ekkehard, Dr., Griesheimer**
**Strasse 12, D-4370 Marl (DE)**

Verfahren zur Trennung von Chlorwasserstoff und Bromwasserstoff

In technischen Prozessen fällt Chlorwasserstoff oft verunreinigt mit Bromwasserstoff an, z. B. bei der Chlorierung bromhaltiger Substanzen oder bei Umsetzungen mit Bromchlorid bzw. Brom-Chlor-Gemischen.

Chlorwasserstoff, der aus Chlor und Wasserstoff erzeugt oder bei der Chlorierung von Kohlenwasserstoffen als Nebenprodukt gewonnen wird, enthält Bromwasserstoff in der Größenordnung von 50 bis 100 ppm. Die Quelle dieser Verunreinigungen ist das bei der elektrolytischen Gewinnung von Chlor unvermeidlich anfallende Brom aus den in den eingesetzten Solen enthaltenen Bromiden.

Bei der Weiterverarbeitung von so erhaltenen Chlorwasserstoff wirkt sich ein Gehalt an Bromwasserstoff immer negativ aus, da er einmal die Ausbeute an erwünschtem Produkt erniedrigt und zum anderen eine Reinigungsoperation erforderlich macht. So muß z. B. Vinylchlorid, das aus Acetylen und Chlorwasserstoff hergestellt wird, destillativ von Anteilen Vinylbromid befreit werden, um ein einwandfreies Material für die Polymerisation zu Polyvinylchlorid zu erhalten. Neben der Notwendigkeit einer besonderen Reinigungsstufe läßt der stark korrosive Charakter des Bromwasserstoffs seine Anwesenheit im Chlorwasserstoff äußerst unerwünscht erscheinen. Schon Spuren von Feuchtigkeit machen Gasgemische, die Bromwasserstoff enthalten, sehr aggressiv gegenüber vielen metallischen Werkstoffen, die in der Technik verwandt werden.

Aus der israelischen Patentschrift 34 481 ist bereits ein Verfahren zur Entfernung von Bromwasserstoff aus Chlorwasserstoff bekannt, das dadurch gekennzeichnet ist, daß man den Bromwasserstoff mit Hilfe von Chlor in Brom überführt (oxidiert) und in einer nachgeschalteten Reaktion das Brom mit dem überschüssigen Chlor entfernt. Dieses Verfahren wurde jedoch für die Hydrolyse von Magnesiumsalzen entwickelt und bietet aufgrund der sehr speziellen Verfahrensbedingungen keinen allgemeinen nutzbaren Weg, um Chlorwasserstoff und Bromwasserstoff zu trennen bzw. Bromwasserstoff aus Chlorwasserstoff abzutrennen.

Aufgabe der vorliegenden Erfindung war es daher, ein allgemein anwendbares Verfahren zur Trennung von Chlorwasserstoff und Bromwasserstoff zu entwickeln, bei dem darüber hinaus die getrennten Bestandteile zu weiteren Umsetzungen verwendet werden können.

Diese Aufgabe wurde nun durch das in den Ansprüchen beschriebene Verfahren gelöst.

Für das erfindungsgemäße Verfahren geeignete Amine sind somit solche, deren Hydrochloride bei Erwärmen in Lösung in freies Amin und Chlorwasserstoff spalten. In Frage kommen dafür tertiäre Alkylamine, tertiäre Aryldialkylamine, sekundäre Arylalkylamine, primäre Alkylarylamine oder Mischungen davon, die 14 bis 36 Kohlenstoffatome enthalten, davon im Falle der tertiären Alkylamine und der tertiären Aryldialkylamine mindestens einen, und im Falle der sekundären Arylalkylamine einen stickstoffgebundenen, mindestens 6 Kohlenstoffatome enthaltenden aliphatischen Rest, und im Falle der tertiären Alkylamine höchstens eine stickstoffgebundene Methylgruppe.

Geeignete Amine sind z. B.
Trihexylamin,
Triheptylamin,
Trioctylamin,
Cyclohexyl-diisooctylamin,
Tri-2-ethylhexylamin,
Di-2-ethylhexylmethylamin,
Didecylethylamin,
Tridodecylamin,
Didodecylmethylamin,
Dodecyldiisopropylamin,
Dodecyldibutylamin,
Dodecyldiisobutylamin,
Dodecylisobutylmethylamin,
Diisopentadecylmethylamin,
Diisopentadecylethylamin,
Diisopentadecylisopropylamin,
N-Octylanilin,
N-2-Ethylhexylanilin,
N-Laurylanilin,
N-Isotridecylanilin,
N-Isopentadecylanilin,
N-Stearylanilin,
N,N-Dihexylanilin,
N,N-Dioctylanilin,
N,N-Di-2-ethylhexylanilin,
N,N-Didodecylanilin,
N-Dodecyl-N-methylanilin,
N-Dodecyl-N-ethylanilin,
N-Dodecyl-N-hexylanilin,
N,N-Dihexyl-p-toluidin,
N,N-Di-2-ethylbutyl-p-toluidin,
N,N-Diheptyl-p-toluidin,
N,N-Dioctyl-p-toluidin und
N,N-Di-2-ethylhexyl-p-toluidin.

Als Lösemittel verwendet man organische Flüssigkeiten, die unter den Bedingungen des Verfahrens inert sind und vorzugsweise oberhalb 120° C sieden. Geeignet sind z. B. geradkettige oder verzweigte aliphatische, cycloaliphatische, aromatische oder araliphatische Kohlenwasserstoffe sowie Gemische dieser Verbindungen, ferner geradkettige Dialkylether sowie cyclische Ether, in $\alpha,\alpha'$-Stellung verzweigte Ketone, gesättigte oder ungesättigte perchlorierte aliphatische Kohlenwasserstoffe sowie heteroatomsubstituierte Benzole, deren Substituenten nicht mit den verwendeten Aminen und den zu trennenden Halogenwasserstoffen reagieren. Geeignete Lösemittel sind z. B. Decan, Tetralin, cis- und trans-Dekalin, Tetradecan, Toluol, o-, m- und p-Xylol, 1,2,4,5-Tetramethylbenzol, Isobutylbenzol, Pentylbenzol, Dodecylbenzol, Dibutylether, Hexylmethylether, Abkömmlinge von Tetrahydrofuran, -pyran und 1,4-Dioxan, Diisopropylketon und 2,6-Dimethylcyclohexanon, Chlorbenzol, Nitrobenzol, Dichlorbenzole und Perchlorethylen.

Die Konzentration des Amins in der Lösung ist nicht kritisch und wird nur durch eine eventuell begrenzte Löslichkeit der entstehenden Dihydrohalogenaddukte bei der gewählten Temperatur eingeschränkt. Die Geschwindigkeit, mit der das Gemisch aus Chlorwasserstoff und Bromwasserstoff durch die Aminlösung geleitet wird, kann über einen weiten Bereich gewählt werden und ist nur von den apparativen Kapazitäten abhängig, solange ein ausreichender Kontakt zwischen flüssiger und gasförmiger Phase gewährleistet ist. Dieser kann in vorteilhafter Weise durch die Verwendung von Füllkörpern in einer Kolonne erreicht werden.

Aufgrund der überraschenden Tatsache, daß sich Aminhydrobromide unter analogen Bedingungen wesentlich schwerer thermisch spalten lassen als Aminhydrochloride und daß gasförmiger Bromwasserstoff den Chlorwasserstoff aus Aminhydrochloriden verdrängt, bieten sich zur Durchführung des erfindungsgemäßen Verfahrens folgende Varianten an:

I) Das Gemisch von Chlorwasserstoff und Bromwasserstoff wird bei einer Temperatur, die unterhalb des Siedepunktes des Lösemittels liegt, behandelt. Aus dem dabei entstehenden Gemisch aus Aminhydrochloriden und Aminhydrobromiden wird sodann zunächst aus den Aminhydrochloriden der Chlorwasserstoff thermisch abgespalten und gegebenenfalls mittels eines Inertgasstroms entfernt. Als Inertgase kommen z. B. Stickstoff, Argon und Ethylen in Frage.

Um ein Durchschlagen von Bromwasserstoff zu vermeiden, ist es zweckmäßig, den gebundenen Chlorwasserstoff nur bis zu 50% zu verdrängen. Die Lösemittel sollen bei der angewendeten Spalttemperatur möglichst niedrige Dampfdrücke haben, ihr Siedepunkt soll möglichst hoch, mindestens aber 20°C über der angewendeten Spalttemperatur, liegen, um den Austrag als Dampf im Inertgasstrom möglichst niedrig zu halten.

Nach der quantitativen Zersetzung der Aminhydrochloride und der vollständigen Entfernung des Chlorwasserstoffs wird sodann aus den verbleibenden Aminhydrobromiden der Bromwasserstoff mit Hilfe einer Base in bekannter Weise abgespalten. Geeignete Basen sind z. B. Natrium-, Kalium- und Calciumhydroxid.

Die Abtrennung des Bromwasserstoffs kann im Bereich zwischen Raumtemperatur und dem Siedepunkt des Amin-Lösemittel-Gemisches erfolgen, da der Bromwasserstoff selbst bei Siedetemperatur nicht gasförmig abgespalten wird. Es ist aber zweckmäßig, ohne Wärmezufuhr zu arbeiten. Der z. B. in Form von Natriumbromid erhaltene Bromwasserstoff kann als solcher oder nach Oxidation zu Brom in bekannter Weise wiedergewonnen werden.

II) Das Gemisch von Chlorwasserstoff und Bromwasserstoff wird bei einer solchen Temperatur mit der Lösung eines Amins behandelt, bei der zwar noch die Aminhydrobromide thermisch stabil, die entsprechenden Aminhydrochloride aber im wesentlichen in Amin und Chlorwasserstoff gespalten sind, d. h. in der Lösung wird nur der Bromwasserstoff angereichert. Im allgemeinen wählt man bei dieser Verfahrensvariante eine Temperatur, die dem Siedepunkt des verwendeten Amin-Lösemittel-Gemisches entspricht oder wenig darunter liegt; bevorzugt liegt sie um 20°C niedriger als der Siedepunkt des Amin-Lösemittel-Gemisches.

Wenn ca. 30 bis 70%, vorzugsweise 50%, des vorgelegten Amins mit Bromwasserstoff abgesättigt sind, wird der zu trennende Gasstrom aus Chlorwasserstoff und Bromwasserstoff durch einen Inertgasstrom ersetzt. Nach der vollständigen Entfernung des Chlorwasserstoffs wird sodann — wie unter I) beschrieben — aus den Aminhydrobromiden der Bromwasserstoff mit einer Base abgespalten und gegebenenfalls zurückgewonnen. Die bei beiden Verfahrensvarianten am Schluß zurückbleibende Lösung des Amins geht nach gegebenenfalls vorhergehender Reinigung in den Trennprozeß zurück.

Das erfindungsgemäße Verfahren wird durch die nachfolgenden Beispiele und Vergleichsbeispiele erläutert.

Sofern nicht anders angegeben, sind alle Prozentangaben Gewichtsprozente.

Der Brom- und Chlorgehalt wurde wie folgt bestimmt:

a) Naßchemische Bestimmung von Brom neben Chlor:
Die saure, $Na_2SO_3$ enthaltende Lösung von NaCl/NaBr in $H_2O$ wird mit $CrO_2Cl_2$ behandelt, das entstehende $Br_2$ abdestilliert und in $NaAsO_2$-Lösung aufgefangen. Das dabei entstehende HBr wird mit 0,001 M $AgNO_3$ titrimetrisch bestimmt.

b) Röntgenfluoreszenz-Bestimmung von Brom:
Die organische Lösung von Aminhydrobromid wird mit Hilfe einer zuvor aufgenommenen Eichkurve bestimmt. Mit dieser Methode kann auch der Chlorgehalt der Probe bestimmt werden.

Vergleichsbeispiel A

97 g (0,25 Mol) Tri-2-ethylhexylammoniumchlorid wurden in 88 g Xylol gelöst und die Lösung in einem 1/2-l-Rundkolben mit Magnetrührer, versehen mit einer 30-cm-Raschigring-Kolonne und Rückflußkühler, unter Durchleiten von 10 l Stickstoff in der Stunde auf Rückfluß erhitzt. Dabei stellt sich eine Sumpftemperatur von 135°C ein. Der den Kühler passierende Stickstoffstrom wurde durch zwei hintereinander geschaltete Waschflaschen geleitet, die mit 0,5 M Natronlauge beschickt waren. Durch titrimetrische Bestimmung nach 3 Stunden wurden 0,24 Mol Chlorwasserstoff, entsprechend einer Ausbeute von 96%, in den Vorlagen gefunden.

### Beispiel 1

80 g (0,184 Mol) Tri-2-ethylhexylammoniumbromid wurden in 79 g 3-Phenylpentan gelöst und die Lösung in einer Apparatur analog Vergleichsbeispiel A bei 185 bis 195°C auf Rückfluß erhitzt. Nach 4,3 h waren 4,7%, nach 12,1 h 5,3% des eingesetzten Bromwasserstoffs in den Vorlagen nachweisbar.

### Vergleichsbeispiel B

Chlorwasserstoff aus einer handelsüblichen Gasbombe wurde über zwei gegeneinander geschaltete Blasenzähler, von denen einer mit konzentrierter Schwefelsäure beschickt wurde, und drei Kühlfallen (−50°C) in ein Absorptionsgefäß geleitet, in dem 40,0 g (1,0 Mol) Natriumhydroxid in 200 ml Wasser gelöst vorlagen. Bei einer Einleitrate von 45 l/h war nach ca. 30 Minuten die vorgelegte Natronlauge neutralisiert. Die Analyse ergab einen Bromwasserstoffgehalt des Chlorwasserstoffs von 70±4 ppm (Nachweisgrenze der verwendeten Analysemethode: 5 mg HBr in 1000 g HCl ≙ 5 ppm).

### Beispiel 2

Zwischen den zweiten Blasenzähler und die erste Kühlfalle der in Vergleichsbeispiel B beschriebenen Absorptionsapparatur wurde ein 96 cm langes Glasrohr von 3 cm Durchmesser eingesetzt, das kurz oberhalb des unten angesetzten Hahnes eine Prozellanfritte besaß und als oberen Abschluß eine Schaumkugel trug. In das mit Glasraschigringen gefüllte Rohr wurde eine Lösung von 200 g (0,47 Mol) Tri-2-ethylhexylamindihydrochlorid in 200 g tert.-Butyl-m-xylol (TBMX) gegeben, entsprechend einer 45gewichtsprozentigen Lösung des Amins in TBMX, und Chlorwasserstoff durch die Fritte eingegast. Die Lösung sättigte sich zunächst unter leicht exothermer Reaktion mit Chlorwasserstoff. Nach erfolgter Sättigung wurde wie in Vergleichsbeispiel B weiterer Chlorwasserstoff zugeführt und nach Passieren der Lösung in Form feinverteilter Blasen schließlich mit 5 M Natronlauge absorbiert. Dabei wurde die Einleitrate variiert, wobei die vorgelegte Lösung nicht ausgetauscht wurde. Bei Durchleitgeschwindigkeiten von

4,5 l/h, 8 l/h, 11 l/h und 22,5 l/h konnte im absorbierten Gas kein Bromwasserstoff nachgewiesen werden.

### Beispiel 3

In der Apparatur gemäß Beispiel 2 wurden 50,0 g (0,157 Mol) N,N-Dioctylanilin, die in ihr Hydrochlorid überführt worden waren, in 300 g Di-n-butylether eingesetzt, entsprechend einer 14,3prozentigen Lösung. Nach Sättigung mit Chlorwasserstoff und Durchleiten mit 15 l/h wurde im absorbierten Chlorwasserstoff kein Bromwasserstoff gefunden.

### Beispiel 4

In der Apparatur gemäß Beispiel 2 wurden 70 g (0,341 Mol) p-2-Ethylhexylanilin als Hydrochlorid in 280 g Tetrachlorethylen eingesetzt, entsprechend einer 25prozentigen Lösung. Bei einer Einleitrate von 15 l/h wurde im absorbierten Chlorwasserstoff kein Bromwasserstoff gefunden.

### Beispiel 5

In der Apparatur gemäß Beispiel 2 wurden 100 g (0,487 Mol) N-Octylanilin als Hydrochlorid in 250 g Nitrobenzol eingesetzt, entsprechend einer 40prozentigen Lösung. Bei einer Einleitrate von 15 l/h wurde in absorbierten Chlorwasserstoff kein Bromwasserstoff gefunden.

### Beispiel 6

In einer Apparatur analog Vergleichsbeispiel A wurde ein Gemisch aus 86,3 g Tri-2-ethylhexylamin (222,4 mMol), 6,3 g HBr (77,8 mMol) und 10,5 g HCl (288,1 mMol) in 100 g Xylol vorgelegt und zum Rückfluß (140°C) gebracht. Nachdem in den Vorlagen 11,5 g NaOH (287,5 mMol) verbraucht waren, wurden aus dem Sumpfprodukt Xylol unter Wasserstrahlpumpenvakuum entfernt und im Rückstand die Restmengen an HCl und HBr festgestellt. Während kein Chlorwasserstoff mehr gefunden wurde, wurde der Gehalt an Bromwasserstoff zu 6,8% bestimmt (berechnet: 6,8%).

### Patentansprüche

1. Verfahren zur Trennung von Chlorwasserstoff und Bromwasserstoff, dadurch gekennzeichnet, daß man das Gemisch von Chlorwasserstoff und Bromwasserstoff mit einem Amin, gelöst in einer inerten organischen Flüssigkeit, behandelt und aus dem dabei entstehenden Gemisch von Aminhydrochloriden und Aminhydrobromiden zunächst aus den Aminhydrochloriden den Chlorwasserstoff thermisch abspaltet und abtrennt und anschließend aus den verbleibenden Aminhydrobromiden den Bromwasserstoff mit Hilfe einer Base abspaltet und gegebenenfalls zurückgewinnt.

2. Verfahren zur Trennung von Chlorwasserstoff und Bromwasserstoff, dadurch gekennzeichnet, daß man das Gemisch von Chlorwasserstoff und Bromwasserstoff bei einer solchen Temperatur mit einem Amin, gelöst in einer inerten organischen Flüssigkeit, behandelt, bei der zwar noch die Aminhydrobromide, nicht mehr jedoch die entsprechenden Aminhydrochloride, thermisch stabil sind, und aus den gebildeten Aminhydrobromiden den Bromwasserstoff mit Hilfe einer Base abspaltet und gegebenenfalls zurückgewinnt.

3. Verfahren nach den Ansprüchen 1 und 2, dadurch gekennzeichnet, daß als Aminkomponente tertiäre Alkylamine, tertiäre Aryldialkylamine, sekundäre Arylalkylamine, primäre Alkylarylamine oder Mischungen davon verwendet werden, die 14 bis 36 Kohlenstoffatome enthalten, davon im Falle der tertiären Alkylamine und der tertiären Aryldialkylamine mindestens einen, und im Falle der sekundären Arylalkylamine einen stickstoffgebundenen, mindestens 6 Kohlenstoffatome enthaltenden aliphatischen Rest, und im Falle der tertiären Alkylamine höchstens eine stickstoffgebundene Methylgruppe.

4. Verfahren nach den Ansprüchen 1 bis 3, dadurch gekennzeichnet, daß als Lösemittel geradkettige oder verzweigte aliphatische, cycloaliphatische, aromatische oder araliphatische Kohlenwasserstoffe sowie Gemische dieser Verbindungen verwendet werden, ferner geradkettige Dialkylether sowie cyclische Ether, in $\alpha,\alpha'$-Stellung verzweigte Ketone, gesättigte oder ungesättigte perchlorierte aliphatische Kohlenwasserstoffe sowie Chlorbenzol, Nitrobenzol oder Dichlorbenzole, wobei der Siedepunkt der eingesetzten Lösemittel mindestens 120°C beträgt.

## Claims

1. A process for separating a mixture of hydrogen chloride and hydrogen bromide, characterized in that the mixture of hydrogen chloride and hydrogen bromide is treated with an amine dissolved in an inert organic liquid and in that from the mixture of amine hydrochlorides and amine hydrobromides obtained by this treatment first hydrogen chloride is thermally split off and separated from the amine hydrochlorides and then hydrogen bromide is split off from the remaining amine hydrobromides by means of a base and may, optionally, be recovered.

2. A process for separating a mixture of hydrogen chloride and hydrogen bromide, characterized in that the mixture of hydrogen chloride and hydrogen bromide is treated with an amine dissolved in an inert organic liquid, at a temperature at which the amine hydrobromides are still thermally stable, the corresponding amine hydrochlorides, however, are no longer thermally stable, and in that hydrogen bromide is split off, by means of a base, from the amine hydrobromides formed and may, optionally, be recovered.

3. A process according to claims 1 and 2, characterized in that tertiary alkylamines, tertiary aryldialkylamines, secondary arylalkylamines, primary alkylarylamines or mixtures thereof are used as amine component, the abovementioned amines having 14 to 36 carbon atoms, wherein the tertiary alkylamines and the tertiary aryldialkylamines have at least one, the secondary arylalkylamines have one nitrogenbonded aliphatic radical containing at least 6 carbon atoms, and the tertiary alkylamines have one nitrogenbonded methyl group at the most.

4. A process according to claims 1 to 3, characterized in that straight-chain or branched aliphatic, cycloaliphatic, aromatic or araliphatic hydrocarbons and mixtures of these compounds as well as straight-chain dialkyl ethers and cyclic ethers, ketones branched in the $\alpha,\alpha'$-position, saturated or unsaturated perchlorinated aliphatic hydrocarbons, and chlorobenzene, nitrobenzene or dichlorobenzenes are used as solvent, these solvents having a boiling point of at least 120°C.

## Revendications

1. Procédé de séparation d'acide chlorhydrique et d'acide bromhydrique caractérisé par le fait que on traite le mélange d'acide chlorhydrique et d'acide bromhydrique par une amine, dissoute dans un liquide organique inerte, on sépare thermiquement du mélange ainsi formé de chlorhydrates d'amines et de bromhydrates d'amines tout d'abord l'acide chlorhydrique à partir des chlorhydrates d'amines et on l'élimine, et puis on sépare, à l'aide d'une base, l'acide bromhydrique à partir des bromhydrates d'amines restants, tout en le récupérant si besoin est.

2. Procédé de séparation d'acide chlorhydrique et d'acide bromhydrique caractérisé par le fait que on traite le mélange d'acide chlorhydrique et d'acide bromhydrique par une amine, dissoute dans un liquide organique inerte, à une température où les bromhydrates d'amines sont encore thermiquement stables, il est vrai, mais plus les chlorhydrates d'amines correspondants, et on sépare, à l'aide d'une base, l'acide bromhydrique à partir des bromhydrates d'amines formés, tout en le récupérant si besoin est.

3. Procédé selon les revendications 1 et 2 caractérisé par le fait que on utilise, comme composant d'amine, des alkylamines tertiaires, des aryl-dialkylamines tertiaires, des aryl-alkylamines secondaires, des alkylarylamines primaires ou des mélanges de celles-ci, ces amines contenant de 14 à 36 atomes de carbone, dont au minimum l'un dans le cas des alkylamines tertiaires et des aryldialkylamines tertiaires, et un radical aliphatique lié à l'azote et contenant au moins 6 atomes de carbone dans le cas des arylalkylamines secondaires, et au maximum un groupe méthylique lié à l'azote dans le cas des alkylamines tertiaires.

4. Procédé selon l'une quelconque des revendications 1 à 3 caractérisé par le fait que on utilise comme solvant des hydrocarbures en chaîne linéaire ou ramifiés aliphatiques, cyclo-aliphatiques, aromatiques ou araliphatiques ainsi que des mélanges de ces composés, en outre des dialkyléthers en chaîne linéaire de même que des éthers cycliques, des cétones ramifiées en $\alpha,\alpha'$, des hydrocarbures aliphatiques perchlorés saturés ou insaturés ainsi que du chlorobenzène, du nitrobenzène ou des dichlorobenzènes, le point d'ébullition des solvants employés étant au moins de 120°C.